Europäisches Patentamt

(19) European Patent Office

Office européen des brevets

(11) Numéro de publication: **0 125 978**
**A2**

(12) **DEMANDE DE BREVET EUROPEEN**

(21) Numéro de dépôt: **84400897.9**

(22) Date de dépôt: **03.05.84**

(51) Int. Cl.³: **B 60 N 1/10**

(30) Priorité: **10.05.83 FR 8307771**

(43) Date de publication de la demande:
**21.11.84 Bulletin 84/47**

(84) Etats contractants désignés:
**DE FR GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Royant, Claude**
**40, rue du Blanc-Soleil**
**78650 Beynes(FR)**

(74) Mandataire: **Ernst-Schonberg, Michel et al,**
**REGIE NATIONALE DES USINES RENAULT (S. 0804)**
**F-92109 Boulogne Billancourt Cedex(FR)**

(54) **Mécanisme de verrouillage, notamment d'un sommet de dossier de siège sur un élément de carrosserie.**

(57) Mécanisme de verrouillage notamment d'un sommet de dossier de siège sur un élément de carrosserie dans lequel un bras pivotant (229) constitue le moyen d'immobilisation d'un verrou (227) monté à rotation autour d'un axe (250) porté par un boîter support (240) traversé par l'axe secondaire (231) fixé au levier de manoeuvre (232) du mécanisme.

Application : Manoeuvre de sièges de véhicules.

FIG.4 5

## MECANISME DE VERROUILLAGE, NOTAMMENT D'UN SOMMET DE DOSSIER DE SIEGE SUR UN ELEMENT DE CARROSSERIE

L'invention concerne un mécanisme de verrouillage, notamment d'un sommet de dossier de siège sur un élément de carrosserie au moyen de verrous portés par chacune des parties latérales du dossier dont les pênes peuvent s'engager sur un élément formant gâche fixé à la paroi latérale adjacente de la carrosserie ou sur une paroi auxiliaire fixée sur cette même paroi latérale, dans lequel l'ensemble des pênes respectivement montés à rotation autour d'un axe solidaire d'un bras pivotant autour d'un axe principal et autour d'un axe secondaire coopère à l'immobilisation et à la libération du mécanisme par rapport à la gâche dans chacune des positions d'utilisation du siège sous l'action du même levier de manoeuvre selon la demande de brevet 82/14 989 déposée le 2 septembre 1982 au nom de la demanderesse.

L'invention a pour objet une variante intéressante du mécanisme précité, selon laquelle le verrouillage du sommet de dossier s'effectue dans deux positions dans laquelle la partie supérieure du dossier est reculée et dans deux positions dans lesquelles la partie supérieure du dossier est plus avancée en correspondance à deux inclinaisons différentes du dossier, conférant au siège une position de confort améliorée.

Selon l'invention, le bras pivotant constitue le moyen d'immobilisation d'un verrou auxiliaire monté à rotation autour d'un axe porté par un boîtier support traversé par l'axe secondaire actionnable en rotation par un levier de manoeuvre.

Le mécanisme ainsi réalisé permet la rétention du sommet du dossier sur l'élément formant la gâche dans une position supplémentaire tout en autorisant les adaptations ennoncées dans la demande de brevet précité.

D'autres caractéristiques et avantages de l'invention vont être mis en évidence dans la description qui va suivre, faite en se référant au dessin annexé sur lequel :

- la figure 1 est une vue en élévation montrant le siège équipé du mécanisme, en position avancée d'utilisation ;

- la figure 2 est une vue en élévation montrant le siège équipé du mécanisme, en position plus reculée d'utilisation;

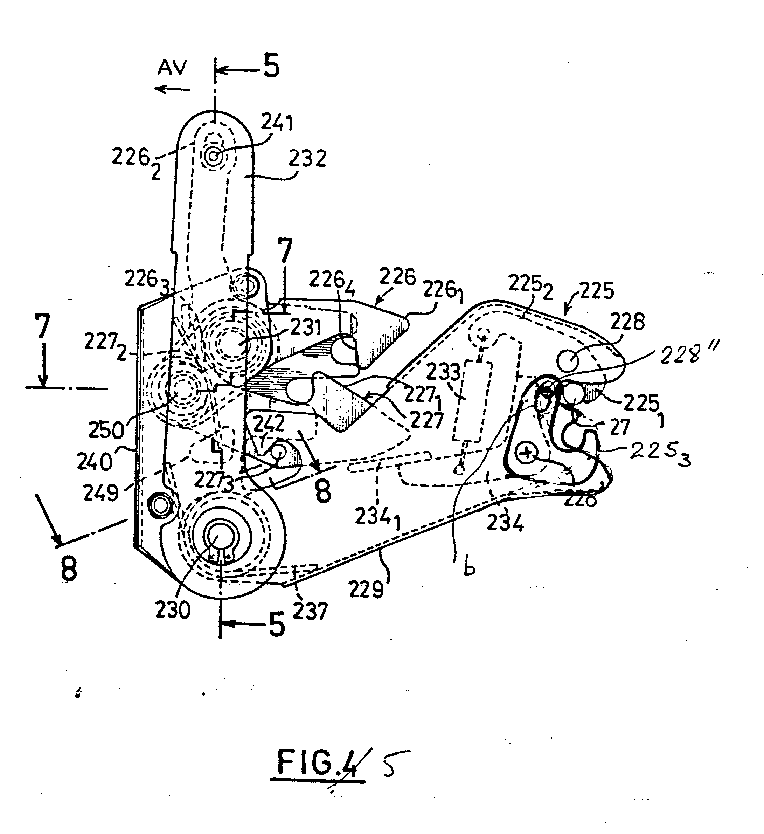

- la figure 3 est une vue en élévation montrant le siège équipé du mécanisme dans une position reculée intermédiaire ;

- la figure 4 est une vue en élévation montrant le siège équipé du mécanisme, dans une position avancée intermédiaire ;

- la figure 5 est une vue en élévation du mécanisme disposé sur un montant latéral de l'armature du dossier correspondant à la position du dossier représentée à la figure 1 ;

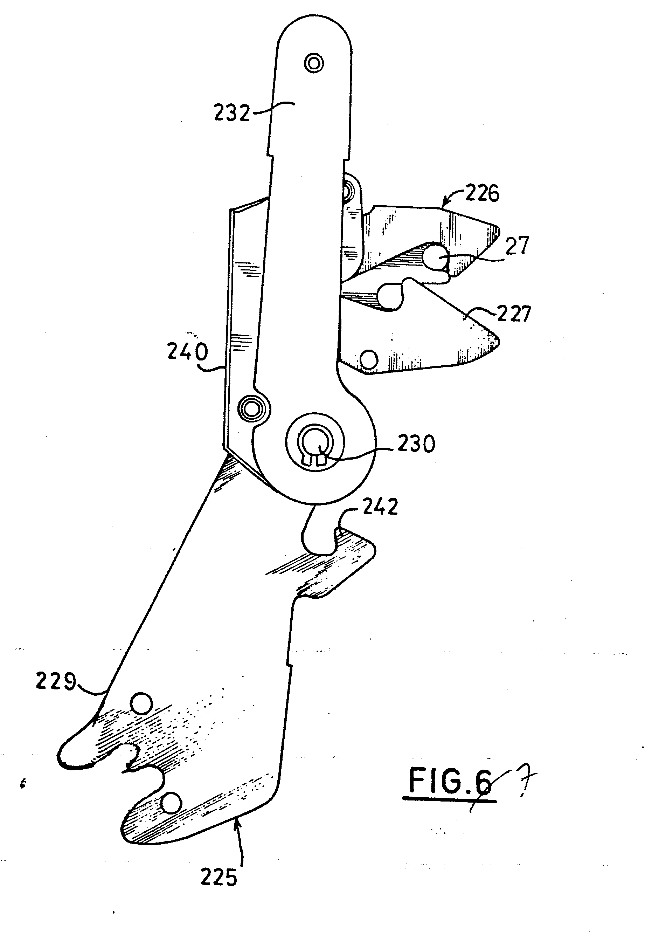

- la figure 6 est une vue en coupe du mécanisme selon la ligne 6-6 de la figure 5 ;

- la figure 7 est une vue en élévation du mécanisme disposé sur le montant latéral de l'armature du dossier correspondant à la position du dossier représentée à la figure 2 ou 3 ;

- la figure 8 est une coupe partielle du mécanisme selon la ligne 8-8 de la figure 5 ;

- la figure 9 est une coupe partielle du mécanisme selon la ligne 9-9 de la figure 5.

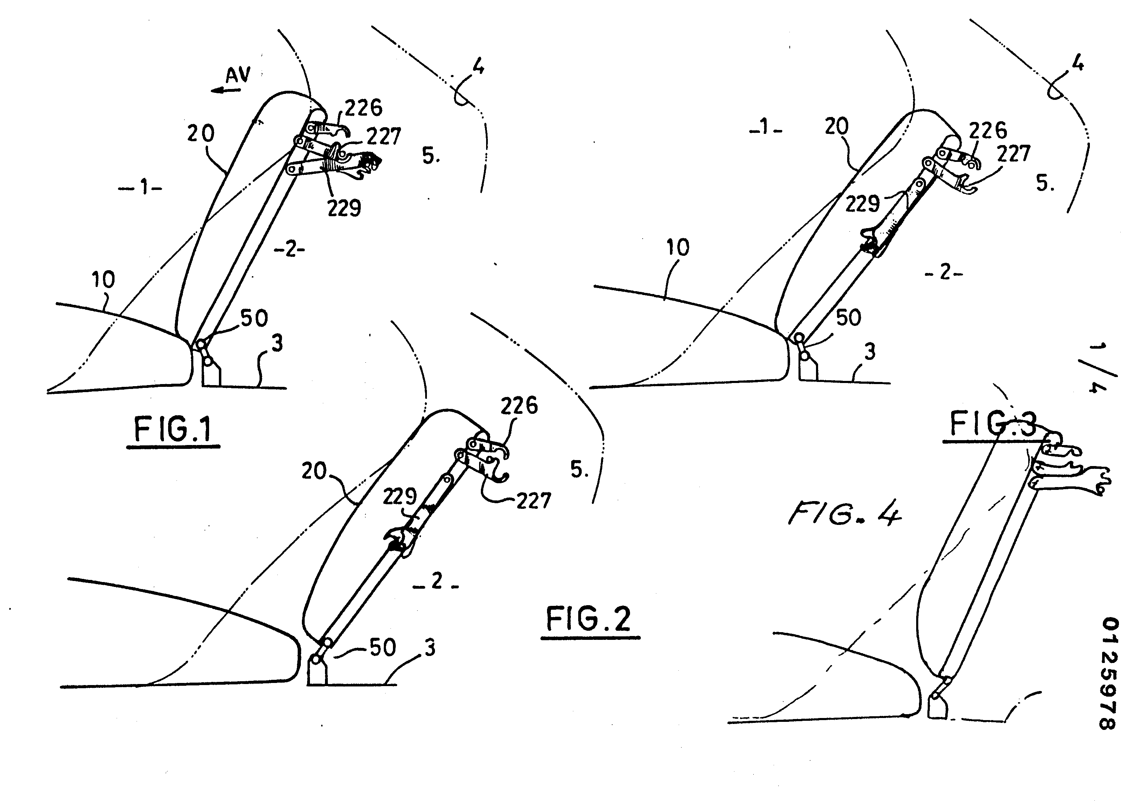

On a représenté partiellement aux figures 1 et 2 un véhicule dont on aperçoit l'habitacle 1, le compartiment à bagages 2, une partie du plancher 3 attenant à la doublure du longeron latéral, le logement 4 de la porte arrière et une paroi latérale 5. Le plancher 3 et la paroi latérale 5 constituent des éléments de la carrosserie de ce véhicule.

Le siège comprend un coussin d'assise 10, et un coussin de dossier 20. Il est sous-entendu que le terme "coussin" désigne l'ensemble des organes constitutifs de l'assise et du dossier et notamment leurs éléments d'ossature et de capitonnage.

Dans la suite de la description, on désignera par convention les organes liés au coussin du dossier par les repères suivant 200, les repères 1 à 9 étant réservés à des éléments fixes de la carrosserie.

Ainsi que cela a été décrit en référence du dessin de la demande 82/14989 , la partie supérieure du coussin de dossier porte une traverse qui se prolonge latéralement vers le bas par deux montants dont les formes coudées épousent chaque passage latéral de la roue du véhicule ainsi que cela est connu, et qui sont réunis à leur base par une traverse inférieure. Les montants et les traverses portent un ensemble de fils qui constituent l'appui d'un capitonnage.

La figure 5 montre plus en détail le mécanisme de déverrouillage du sommet du dossier de siège. Le mécanisme comprend essentiellement trois ensembles de verrous 225, 226, 227 portés par un même montant de dossier, mais il est entendu qu'un ensemble identique de verrous est porté par l'autre montant. Chaque verrou 225, 226, 227 porte au moins un pène $225_1$, $226_1$, $227_1$ engageable sur un téton 27 formant gâche, rigidement fixé à la paroi latérale 5 adjacente de la carrosserie ou sur une paroi auxiliaire fixée à cette même paroi latérale.

Le pène $225_1$ est monté à rotation autour d'un axe 228 solidaire d'un bras 229 monté pivotant autour d'un axe principal 230. L'axe principal 230 solidarisera les bras latéraux 229 des deux mécanismes porteurs des pènes $225_1$.

Le pène $226_1$ est monté à rotation autour d'un axe secondaire 231 porté par un boîtier 240.

L'élément de support ou boîtier 240 est destiné au préassemblage de l'ensemble des organes notamment nécessaires à la manoeuvre (levier 232) et au verrouillage (verrous 226, 227) et qui porte les axes 230 - 231 - 250.

De même, l'axe secondaire 231 solidarisera les pènes 226 entraînés par les leviers de manoeuvre 232 disposés sur les côtés latéraux du dossier.

Le pène $225_1$, est prolongé par un bras de commande $225_2$, auquel est accrochée l'extrémité d'un ressort 233 de commande de libération de la gâche 27. L'autre extrémité du ressort 233 est reliée à un cliquet de commande 234, monté tournant autour d'un axe 228' porté par le bras 229, qui possède une surface de butée en appui sur la surface de butée correspondante du pène $225_1$ et une surface de commande $234_1$ sur laquelle agit l'extrémité du pène $227_1$.

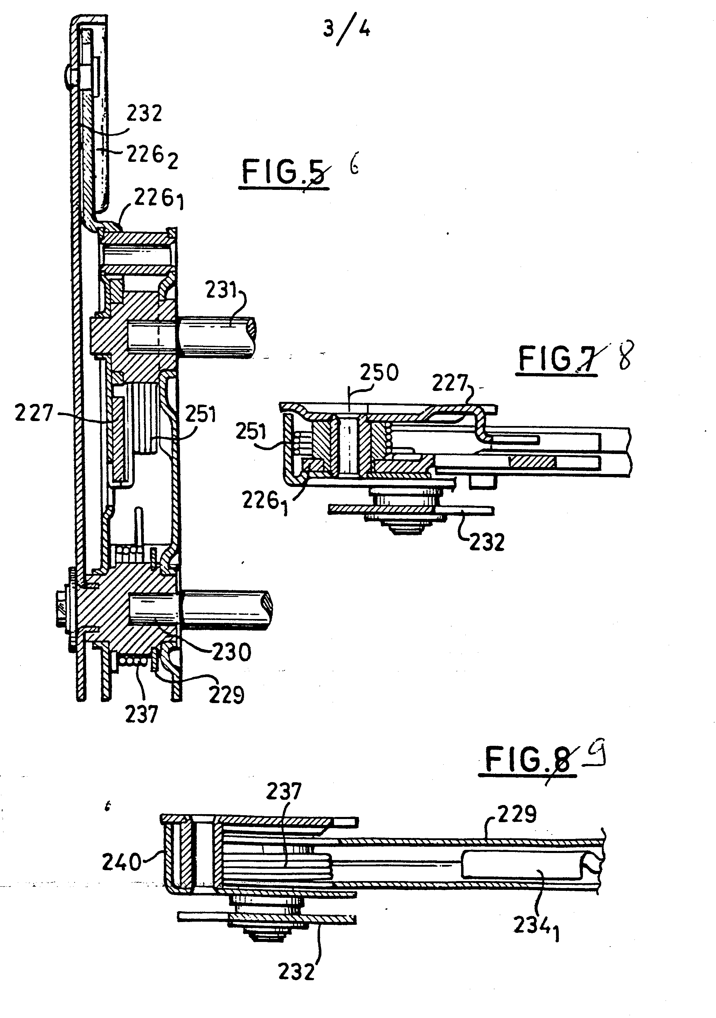

Un pène $225_3$ est monté à rotation autour de l'axe 228' et est commandé conjointement avec le pène $225_1$. A cet effet, le pène $225_1$ porte un téton de commande 228" engagé dans une boutonnière b du pène $225_3$. Le pène $225_3$ assure le verrouillage du dossier avec la gâche 27 conformément à la figure 4.

Un ressort 237 disposé à la périphérie de l'axe principal 230 possède ses extrémités respectivement en appui sur le boitier 240 et sur le bras 229 dans le but de solliciter ce bras 229 d'une position de verrouillage représentée à la figure 5 vers une position de rangement représentée à la figure 7.

Un téton 241 porté par le levier 232 constitue le moyen d'entraînement du deuxième pène $226_1$ monté à rotation autour de l'axe secondaire 231. A cet effet, le pène $226_1$ possède une configuration coudée en L dont le bras $226_2$ s'étend le long des flancs du levier de manoeuvre 232 et se termine par une fourchette engagée sur le téton 241. Le verrou 226 porte par ailleurs une butée d'appui d'un ressort 251 et un ergot de commande $226_3$ d'un verrou auxiliaire 227.

Selon l'invention, le verrou auxiliaire 227 est monté à rotation autour d'un axe 250 porté par le boîtier 240, un ressort 251 respectivement en appui sur le champ du verrou auxiliaire 227 et sur le verrou 226 est enroulé autour de l'axe 250 et sollicite les verrous 226, 227 l'un vers l'autre. Le verrou auxiliaire 227 porte par ailleurs une encoche $227_2$ qui constitue le logement de l'ergot de commande $226_3$ du verrou 226 et un têton de retenue $227_3$ du bras 229. Ce dernier porte à cet effet un crochet 242 engageable sur le têton $227_3$ comme cela est représenté à la figure 5.

Le pène $226_1$ porte une mâchoire $226_4$ qui est engageable sur la gâche 27 dans la position représentée à la figure 7 dans laquelle le premier pène $225_1$ est dégagé de la gâche 27. Dans un but de simplification, le bras pivotant 229 et le levier de manoeuvre 232 sont montés à rotation autour de l'axe principal 230 et le ressort 251 prenant appui sur les pènes 226 et 227 assure le rappel du levier de manoeuvre 232 dans sa position de repos correspondant à l'une quelconque des positions d'utilisation du siège ainsi que le rappel des pènes 226, 227 dans leur position de verrouillage. Pour passer de la position du dossier représentée à la figure 5 à la position représentée à la figure 7, on déplace le levier de manoeuvre 232 dans le sens de la flèche. Ce mouvement assure le relevage du pène $226_1$ par l'intermédiaire du têton 241 et la rotation du cliquet de commande 234 par l'intermédiaire du verrou 227 . La séparation des surfaces de butée portées par le cliquet 234 et par le pène $225_1$ favorise la rotation du pène $225_1$ autour de l'axe 228 et la libération de la gâche 27. Le déplacement du levier de manoeuvre 232 a également pour effet de dégager le têton de retenue $227_3$ porté par le verrou auxiliaire 227 du crochet 242 porté par le bras 229. Le déplacement du levier 232 a également pour effet de faire descendre le pène $227_1$ conjointement avec le verrou 227 sous l'action de l'entraînement positif réalisé par l'ergot de commande $226_3$ du verrou 226 engagé dans l'encoche $227_2$ du verrou auxiliaire 227.

Le déplacement du levier de manoeuvre 232 dans le sens de la flèche AV libère le bras pivotant 229 qui bascule vers le bas conjointement avec les organes 234, 225 autour de l'axe principal 230 sous l'action du ressort 237.

Le déplacement du sommet du dossier dans le sens de la flèche AV permet le basculement du dossier vers l'avant lorsque ce dernier porte un axe d'articulation 50 situé à la base de montants comme représenté au dessin.

Pour obtenir la position de verrouillage représentée par exemple à la figure 7, il suffit de ramener légèrement le dossier vers sa position initiale en sens inverse de la flèche AV, ce qui a pour effet d'engager le pène $226_1$ ou $227_1$ sur la gâche 27.

A cet effet, les pènes $225_1$, $226_1$, $227_1$ portent chacun une rampe d'accostage qui a pour effet de soulever légèrement le pène $225_1$, $226_1$ ou $227_1$ à l'encontre des ressorts 233, 251 sous l'effet de la pression de contact d'un pène avec la gâche 27 avant qu'ils ne soient rappelés en position par ces mêmes ressorts lorsqu'ils sont à l'aplomb de la gâche.

Il est à noter que le pène 226 peut être prolongé directement vers le haut par un élément de commande directe en remplacement du levier 232.

REVENDICATIONS

1. Mécanisme de verrouillage notamment d'un sommet de dossier de siège (20) sur un élément de carrosserie (5) au moyen de verrous (225, 226, 227) portés par chacune des parties latérales du dossier, dont le pène ($225_1$, $226_1$, $227_1$) peut s'engager sur un élément (27) fixé à la paroi latérale adjacente de la carrosserie ou sur une paroi auxiliaire fixée sur cette paroi latérale, mécanisme dans lequel un ensemble de pènes ($225_1$, $226_1$) respectivement montés à rotation autour d'un axe (228) solidaire d'un bras pivotant (229) autour d'un axe principal (230) et autour d'un axe secondaire (231), coopère à l'immobilisation et à la libération du mécanisme par rapport à la gâche (27) dans chacune des positions d'utilisation du siège sous l'action du même levier de manoeuvre (232), caractérisé par le fait que le bras pivotant (229) constitue le moyen d'immobilisation d'un verrou (227) monté à rotation autour d'un axe (250) porté par un boîtier support (240) traversé par l'axe secondaire (231) actionnable en rotation par le levier de manoeuvre (232).

2. Mécanisme selon la revendication 1, caractérisé par le fait que les verrous (226, 227) portés par le boîtier support (240) portent des moyens d'entraînement mutuel ($227_2 - 226_3$) sous l'action du levier de manoeuvre (232) à l'encontre d'un ressort (251).

3. Mécanisme selon la revendication 1 ou 2, caractérisé par le fait que les verrous (226, 227) respectivement portés par les axes secondaires (231, 250) et par le boîtier (240) sont sollicités respectivement l'un vers l'autre sous l'action d'un même ressort (251) enroulé autour de l'axe de rotation (250) de l'un (227) desdits verrous.

4. Mécanisme selon l'une quelconque des revendications 1 à 3, caractérisé par le fait que le pène (226) est prolongé vers le haut par un élément de commande directe.

AV

20

226

227

229

-1-

-2-

5.

10

50

3

**FIG.1**

20

226

229

227

-2-

5.

50

3

**FIG.2**

-1-

20

226

227

229

5.

10

-2-

50

3

**FIG.3**

**FIG. 4**

226

227

1/4

0125978

0125978

FIG.4 5

**FIG.5**

232
226₂
226₁
231
227
251
230
229
237

**FIG.7**

250
227
251
226₁
232

**FIG.8**

237
229
240
234₁
232

FIG.6